# EUROPÄISCHE PATENTSCHRIFT

(11) **EP 2 334 451 B1**
(45) Veröffentlichungstag und Bekanntmachung des Hinweises auf die Patenterteilung: **25.07.2012**
(21) Anmeldenummer: 09783276.0
(22) Anmeldetag: 22.09.2009
(51) Int. Cl.: B21J 5/10, B21J 9/04, B23Q 3/18

(54) **ZENTRIEREINRICHTUNG ZUM ZENTRIEREN DER BEIDEN ENDEN EINER STANGE**
CENTERING DEVICE FOR CENTERING BOTH ENDS OF A ROD
DISPOSITIF DE CENTRAGE DESTINÉ À CENTRER LES DEUX EXTRÉMITÉS D'UNE BARRE

(30) Priorität: 24.09.2008 AT 14912008
(43) Veröffentlichungstag der Anmeldung: 22.06.2011
(73) Patentinhaber: SSC Anlagenbau GmbH, 8605 Kapfenberg (AT)
(72) Erfinder: BARTL, Roman Michael, A-8071 Grambach/Graz (AT)
(74) Vertreter: Margotti, Herwig Franz
(86) Internationale Anmeldenummer: PCT/EP2009/062251
(87) Internationale Veröffentlichungsnummer: WO 2010/034705

(56) Entgegenhaltungen:
- US-A- 2 341 602
- US-A- 3 091 139

## Beschreibung

Die Erfindung betrifft eine Zentriereinrichtung zum Zentrieren der beiden Enden einer Stange mit einem runden Querschnitt, vorzugsweise einer heißen, insbesondere einer weißglühenden Stange aus Stahl.

Zur Bearbeitung der Endbereiche von Stangen ist es erforderlich, diese Endbereiche der Stangen in eine bestimmte Lage gegenüber dem Bearbeitungswerkzeug bzw. gegenüber der Bearbeitungsvorrichtung zu bringen. Eine solche Bearbeitung kann beispielsweise im Vorsehen von Löchern an den Stirnseiten der Stangen liegen, was durch Ausbrennen mit Elektroden, Zerspanen oder Heißpressen bewerkstelligt werden kann. Hierbei liegt die besondere Problematik darin, dass die Stirnflächen der Stangen mit deren Mittelachse keinen rechten Winkel einschließen, und weiters darin, dass die Mittelachsen der Stangen nicht gerade, sondern z.B. aufgrund eines durch Temperaturbeeinflussung gegebenen Verzugs oftmals bogenförmig verlaufen.

Für das Herstellen von Rohren in Schrägwalzwerken hat es sich als besonders vorteilhaft erwiesen, heiße Stangen, d.h. in Weißglut - üblicherweise weisen diese eine Temperatur von über 1200° Celsius auf- mit einem Loch durch Heißpressen zu versehen. Das bedeutet, dass ein Lochstempel in die Stirnseite der Stange einzupressen ist, wobei das Material nur verdrängt wird. Der Vorteil hierbei ist darin zu sehen, dass der Vorgang sehr schnell und ohne Materialverlust abläuft. Dieser Vorgang bedingt jedoch eine genaue zentrische Lage des Lochs in der Stirnseite, da sich andernfalls über den Rohrumfang ungleiche Wandstärken über einen längeren Bereich des Rohres und damit Ausschuss ergeben.

US 3,091,139 A offenbart eine Zentriereinrichtung, in welcher eine Stange auf Hubeinrichtungen abgelegt wird, welche die Stange gemeinsam auf ein mit einem Lochstempel weitgehend übereinstimmendes Höhenniveau anheben. Anschließend wird das Stangenende von einer Zentriereinheit erfasst, welche zwei parallel zu den Hubeinrichtungen bewegbare Zentrierzangen aufweist. Diese heben die Stange aus den Hubeinrichtungen aus und auf das exakte Höhenniveau zum Lochen.

Der Erfindung liegt die Aufgabe zugrunde, Stangen, vorzugsweise heiße Stahlstangen, insbesondere eine Temperatur von etwa 1250° Celsius aufweisende Stangen, an ihren beiden Enden zu zentrieren, und zwar gegenüber einer vorgegebenen Achse, wobei die Stangen gegebenenfalls auch eine krumme Längsachse aufweisen oder einen nicht kreisrunden, sondern einen ovalen Querschnitt, oder über ihre Länge hin leicht konisch geformt sein können. Die Enden sollen in eine Zentrumslage gebracht werden, welche Zentrumslage einer idealen geraden Mittelachse des Stangenmaterials entspricht. Vorteilhaft ist dies für eine nachfolgende zentrische Lochung mit einer entlang einer Führung zur zentrisch liegenden Stirnseite bringbaren Lochvorrichtung, wie z.B. einem Pressstempel. Die Schwierigkeit hierbei liegt vor allem darin, dass das Stangenmaterial weißglühend ist.

Diese Aufgabe wird erfindungsgemäß durch die Kombination folgender Merkmale gelöst:
- mindestens zwei voneinander unabhängig bewegliche, die Stange unterstützende und hebende Hubeinrichtungen, ausgerichtet jeweils zum Unterstützen der Stange an zumindest jeweils einem Endbereich,
- jeweils eine benachbart zu den die Endbereiche der Stange hebenden Hubeinrichtungen vorgesehene und die Stange in gehobenem Zustand kontaktierende Zentriereinheit,
- wobei jede Zentriereinheit zwei gegeneinander symmetrisch zu einer Mittelebene bewegbare Zentrierzangen aufweist, von denen jede zwei gegeneinander geneigte und mit der Stange in Kontakt gelangende Stützflächen aufweist, die zentralsymmetrisch zu einem Zentrum, in dem das Zentrum der Endbereiche der Stange zu liegen kommen soll, vorgesehen sind, wobei die Bewegungsrichtung der beiden Zentrierzangen mit der mit der Hubbewegungsrichtung der Hubeinrichtungen einen Winkel von 90° ± 30°, insbesondere 90° ± 15°, einschließt und
- wobei die Kraft ausgeübt von den Zentrierzangen auf die Stange und die Hubkraft der Hubeinrichtungen derart aufeinander abgestimmt sind, dass die Zangenkraft ausreicht, die Stange in Bewegungsrichtung der Zentrierzangen auf den Hubeinrichtungen zu verschieben und ein Heben der Stange mittels der Hubeinrichtungen in die Zentrierlage auch bei einem ersten Kontakt der Stange mit einer der Stützflächen möglich ist.

Was die Dimensionierung der Zentriereinrichtung betrifft, ist auszugehen von der größten Stange - hinsichtlich Länge, Durchmesser und Gewicht - die mittels der Zentriereinrichtung in eine Zentrumslage zu bringen ist.

Gemäß einer bevorzugten Ausführungsform weisen die Hubeinrichtungen mit einer Stange in Kontakt gelangende Auflageflächen mit seitlichen Endbereichen auf, die zur Verhinderung eines seitlichen Abgleitens einer Stange aufwärts gerichtet sind, wobei zwischen diesen Endbereichen ein Bereich der Auflageflächen zum Übertragen der Hubkraft auf die Stange vorgesehen ist und wobei die Distanz der aufgerichteten Endbereiche ein seitliches Spiel gegenüber einer auf den Auflageflächen aufliegenden Stange zulassend gestaltet sind.

Vorzugsweise sind die die Hubkraft übertragenden Auflageflächen der Hubeinrichtungen an freien Enden von Schwenkhebeln vorgesehen, deren Schwenklager ortsfest in einem Niveau unterhalb der Zentriereinheiten angeordnet sind.

Eine besonders robuste Konstruktion ist dadurch gekennzeichnet, dass Zentrierzangen einer Zentriereinheit längs einer an der Zentriereinheit vorgesehenen Führung zueinander und voneinander verschiebbar angeordnet sind.

Eine universelle Verwendung der Zentriereinrichtung ist angegeben, wenn zumindest eine der Zentriereinheiten zwecks Anpassung an unterschiedliche Längen der Stangen gegenüber der zweiten Zentriereinheit unter Veränderung des Abstands zu dieser bewegbar und von dieser wegbewegbar ist, vorzugsweise durch Verschieben entlang einer ortsfesten Führung

Für schwere und heiße Stangen, die raue Betriebsbedingungen ergeben, ist es vorteilhaft, wenn die Zentrierzangen einer Zentriereinheit über ein hydraulisch betriebenes Zahnstangengetriebe miteinander bewegungsgekoppelt sind.

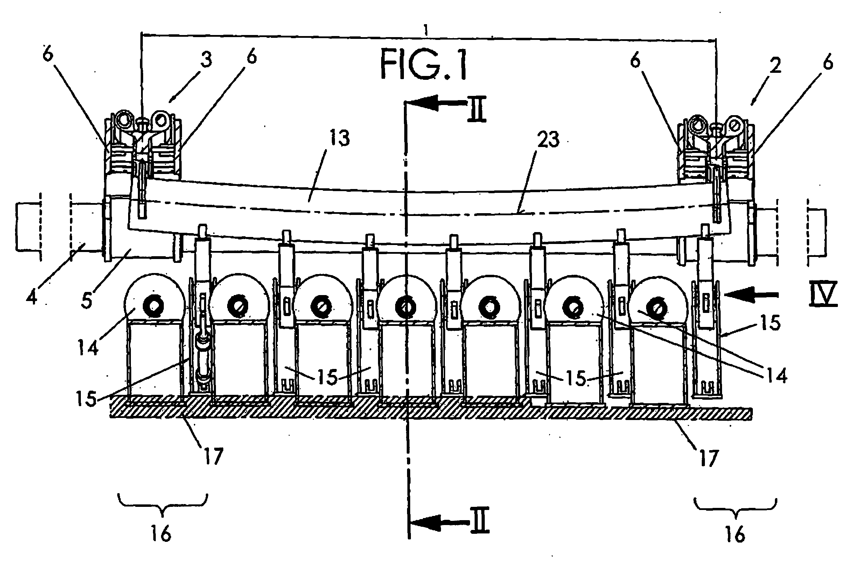

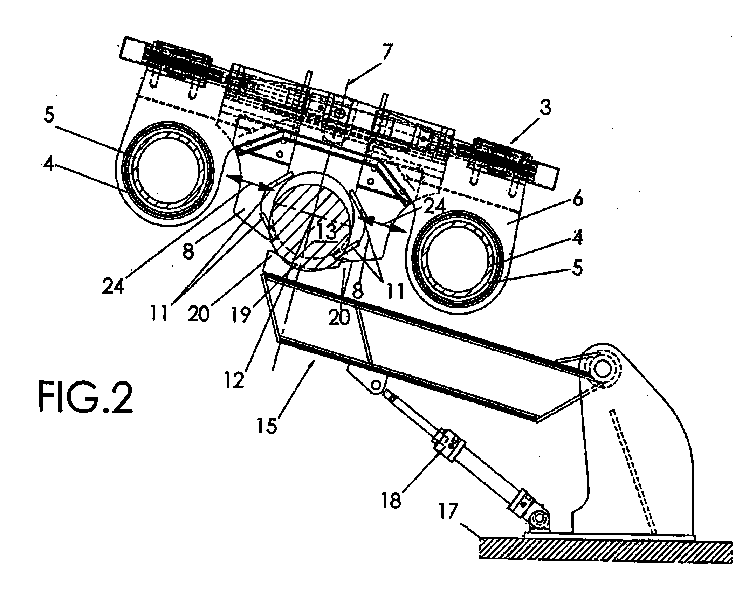

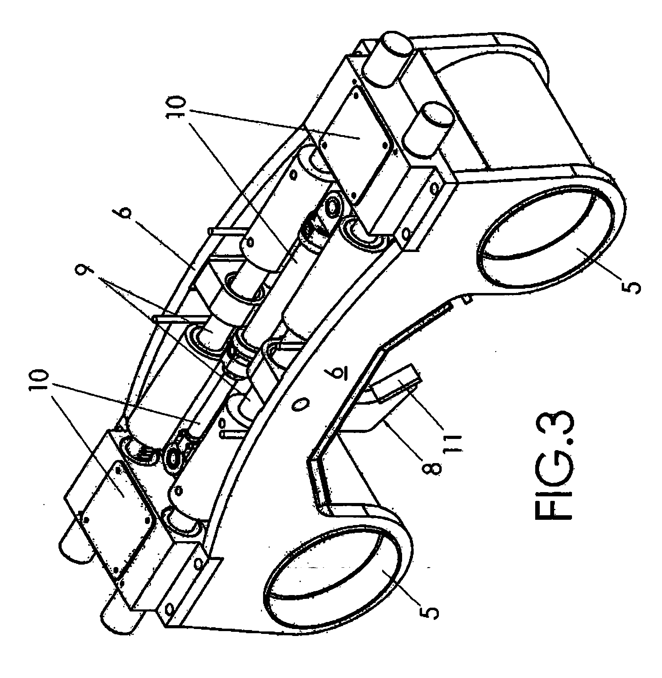

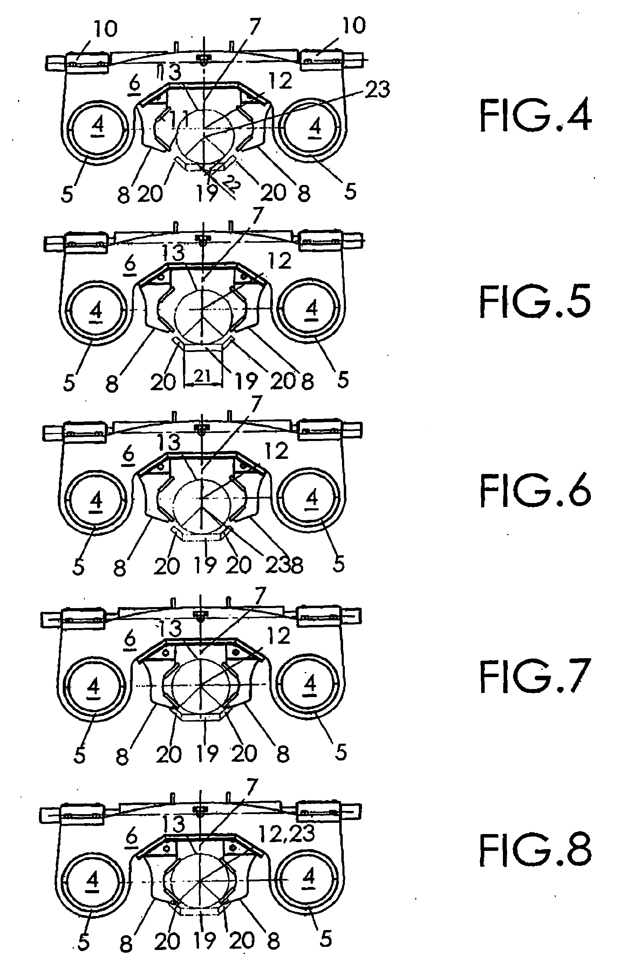

Die Erfindung ist nachfolgend anhand der Zeichnung an einem Ausführungsbeispiel näher erläutert, wobei Fig. 1 eine Seitenansicht, Fig. 2 einen Schnitt gemäß der Linie II-II der Fig. 1 im vergrößerten Maßstab und Fig. 3 die Schrägrissdarstellung eines Details zeigen. Die Fig. 4 bis 8 veranschaulichen die Wirkungsweise, wobei alle Darstellungen eine Ansicht in Richtung des Pfeiles IV der Fig. 1 , jedoch zu unterschiedlichen Zeitpunkten während eines Zentriervorganges, zeigen.

Die Zentriereinrichtung weist zwei im Abstand 1 voneinander angeordnete Zentriereinheiten 2, 3 auf, von denen eine (2) ortsfest angeordnet ist und die andere (3) entlang einer die beiden Zentriereinheiten 2, 3 verbindenden Führung 4 unter Veränderung des Abstandes 1 von dieser weg bzw. zu dieser hin bewegbar ist, vorzugsweise mittels eines nicht näher dargestellten Hydraulikantriebs. Die Führung 4 ist von zwei parallel liegenden rohrförmig gestalteten Führungsstangen gebildet, entlang der die Zentriereinheiten 2, 3 mittels an ihnen vorgesehenen Buchsen 5 geführt sind.

Jede Zentriereinheit 2, 3 weist einen die Führungsstangen brückenartig übergreifenden Grundkörper 6 auf, in dem die Buchsen 5 vorgesehen sind. In dem die Buchsen verbindenden Teil des Grundkörpers 6 sind zwei gegeneinander und symmetrisch zu einer Mittelebene 7 bewegbare Zentrierzangen 8 vorgesehen, die entlang einer in dem Grundkörper 6 vorgesehenen Führung 9 verschiebbar sind, und zwar mittels eines hydraulisch betriebenen Zahnstangengetriebes 10, mit dem sie miteinander bewegungsgekoppelt sind, sodass beide Zentrierzangen 8 stets nur gemeinsam und synchron gegeneinander oder voneinander bewegt werden können.

Jede der Zentrierzangen 8 weist zwei gegeneinander geneigte Stützflächen 11 auf, die zentralsymmetrisch zu einem in der Mittelebene 7 liegenden Zentrum 12 angeordnet sind. Sie dienen zum Erfassen einer zwischen die Zentrierzangen 8, wenn sie sich in ihrer auseinander gefahrenen Stellung befinden, gebrachten zu zentrierenden Stange 13.

Die zu zentrierenden Stangen 13 weisen einen runden Querschnitt auf, der jedoch nicht kreisrund sein muss, sondern beispielsweise aufgrund der Festigkeit oder aufgrund von Temperaturunterschieden an der Oberfläche auch oval sein kann. Weiters können die Stangen 13 über ihre Länge hin auch leicht konisch, also in Form eines Kegelstumpfes, vorliegen, der einen sehr kleinen Öffnungswinkel aufweist. Die Längsachsen 23 der Stangen 13 können geringfügig von einer Geraden abweichen, z.B. bogenförmig verlaufen.

Der minimale und maximale Abstand 1 der beiden Zentriereinheiten 2, 3 voneinander richtet sich nach den Dimensionen der zu zentrierenden Stangen 13. Ebenso sind die Zentrierzangen 8 in eine maximale Entfernung voneinander zu bringen, sodass die Stange 13 mit dem größten Querschnitt noch in eine Lage zwischen die Zentrierzangen 8 bringbar ist.

Die Stangen selbst gelangen über Rollgangsrollen 14 in eine Lage unter die Zentriereinheiten 2, 3. Um sie in eine Lage zwischen die Zentrierzangen 8 zu bringen, sind Hubeinrichtungen 15 vorgesehen, wobei sich die Anzahl der Hubeinrichtungen 15 nach der maximalen Länge der Stangen 13 und deren Festigkeit richtet, sodass diese auch im weißglühenden Zustand, also wenn sie eine Temperatur von über 1200° Celsius (für Stahl) aufweisen, gut unterstützt sind. Mindestens eine Hubeinrichtung 15 befindet sich jedoch jeweils in den Endbereichen 16 einer Stange 13 und somit auch in der Nähe einer der Zentriereinheiten 2, 3.

Die Hubeinrichtungen 15 sind als Schwenkhebel ausgebildet und zwischen den Rollgangsrollen 14 angeordnet und gegenüber dem Fundament 17 schwenkbar, und zwar mittels Hydraulikzylinder 18, wobei die Schwenkbewegung ausgehend von einer Lage knapp unterhalb der Oberkante der Rollgangsrollen 14 bis in eine Lage knapp unterhalb der Zentriereinheiten 2, 3 reicht. Jede Hubeinrichtung 15 ist einzeln bewegbar und weist eine mit einer Stange 13 in Kontakt gelangende Auflagefläche 19 auf, die zur Verhinderung eines seitlichen Abgleitens einer Stange 13 mit seitlich nach oben ragenden Endbereichen 20 versehen ist. Zwischen diesen nach oben ragenden Endbereichen 20 weist jede Auflagefläche 19 jedoch eine Breite 21 auf, die es gestattet, auch eine Stange 13 mit dem größten Durchmesser, die zentriert werden soll, um ein geringes Ausmaß an der Auflagefläche 19 zu verschieben. Wenn die Stange 13 auf der Auflagefläche 19 aufliegt, so ist somit ein gewisses seitliches Spiel 22 zu den Endbereichen 20 gegeben.

Da die Hubbewegung dieser Hubeinrichtungen 15 durch Anschlagen der darauf liegenden Stange 13 gestoppt wird, ist ein entsprechend den Stangengewicht gesteuerter Versorgungsdruck der Hydraulik 18 vorgesehen. Die voneinander unabhängige Beweglichkeit der einzelnen Hubeinrichtungen 15 ermöglicht eine unterschiedliche Hubendlage. Daher stützen die Auflageflächen 19 die aufliegende Stange 13 möglichst gleichmäßig ab.

Die Funktion der Einrichtung ist nachfolgend anhand der Figuren 4 bis 8 näher erläutert:
Wie aus Fig. 4 zu ersehen ist, heben die Hubeinrichtungen 15 die auf den Auflageflächen 19 aufliegende Stange 13 in eine Lage zwischen die Zentrierzangen 8, die zunächst in eine Stellung gebracht sind, in der sie die größte Distanz voneinander aufweisen.

Sodann werden die Zentrierzangen 8 gegeneinander bewegt, wobei in der Regel zunächst eine der Zentrierzangen 8 mit der Oberfläche der Stange 13 in Kontakt tritt, zumal sich die auf den Auflageflächen 19 befindliche Stange 13 zumindest mit ihren Endbereichen meist in einer Lage befindet, in der ihre Achse 23 außerhalb der Mittelebene 7 liegt. Durch weiteres Zueinanderbewegen der Zentrierzangen 8 kann nunmehr die Stange 13 - mit ihren Endbereichen - in eine Lage gebracht werden, in der ihre Achse 23 in der Mittelebene 7 zu liegen kommt (vgl. Fig. 6).

Durch weiteres Anheben der Stange 13 mittels der Hubeinrichtungen 15 und weiteres Zusammenbewegen der Zentrierzangen 8 (vgl. Fig. 7) gelangt die Stange 13 letztendlich mit allen zentralsymmetrisch angeordneten Stützflächen 11 in Kontakt und ihre Achse 23 - zumindest an den Endbereichen der Stange - liegt nunmehr in genau zentrischer Lage (vgl. Fig. 8).

Die Zentrierzangen 12 müssen hierbei eine Kraft auf die Stange 13 ausüben, die es gestattet, die Stange 13 auf den Auflageflächen 19 zu verschieben, wie dies aus den Fig. 5 und 6 zu entnehmen ist, wobei die Hubkraft wiederum stark genug sein muss, um ein Anheben der Stange 13 von der in Fig. 6 dargestellten Lage in die in Fig. 8 dargestellte Lage zu bewerkstelligen, und zwar trotz der Reibungskräfte, die von den Stützflächen 11 bei Kontakt derselben mit der Stange 13 und durch das Zusammenbewegen der Zentrierzangen 8 auftritt; jedoch darf die Hubkraft ein gewisses Maß nicht überschreiten, das dadurch bestimmt ist, dass ein Überschreiten dieses Maßes ein Auseinanderbewegen oder Beschädigen der Stützflächen 11 einer bereits in eine Lage gemäß Fig. 8 gebrachten Stange 13 bewirken könnte.

Wie insbesondere aus Fig. 2 zu erkennen ist, schließt die Bewegungsrichtung 24 der Zentrierzangen 8 mit der Hubschwenkbewegung einen Winkel ein, der nicht unbedingt 90 Grad entsprechen muss. Er kann bis zu 30° in beide Richtungen von 90° abweichen, vorzugsweise bis zu 15°.

Erreicht die Stange 13 die Position gemäß Fig. 8, so sind deren Endbereiche, insbesondere deren Stirnflächen, in die bestmöglich zentrierte Lage gebracht und diese Endflächen können bearbeitet, beispielsweise mit einem Loch versehen werden, insbesondere durch Heißpressen. Nach dem Bearbeiten der Stirnflächen bzw. der Endbereiche der Stangen 13 werden die Stangen 13 ausgefördert, beispielsweise mittels eines unter die Stange 13 gefahrenen Transferwagens.

## Patentansprüche

1. Zentriereinrichtung zum Zentrieren der beiden Enden einer Stange (13) mit einem runden Querschnitt, vorzugsweise einer heißen, insbesondere einer weißglühenden Stange (13) aus Stahl, **gekennzeichnet durch** die Kombination folgender Merkmale:
- mindestens zwei voneinander unahhängig hewegliche, die Stange (13) unterstützende und hebende Hubeinrichtungen (15), ausgerichtet jeweils zum Unterstützen der Stange (13) an zumindest jeweils einem Endbereich (16),
- jeweils eine benachbart zu den die Endbereiche (16) der Stange (13) hebenden Hubeinrichtungen (15) vorgesehene und die Stange (13) in gehobenem Zustand kontaktierende Zentriereinheit (2, 3),
- wobei jede Zentriereinheit (2, 3) zwei gegeneinander symmetrisch zu einer Mittelebene (7) bewegbare Zentrierzangen (8) aufweist, von denen jede zwei gegeneinander geneigte und mit der Stange (13) in Kontakt gelangende Stützflächen (11) aufweist, die zentralsymmetrisch zu einem Zentrum (12), in dem das Zentrum der Endbereiche der Stange (13) zu liegen kommen soll, vorgesehen sind, wobei die Bewegungsrichtung (24) der beiden Zentrierzangen (8) mit der Hubbewegungsrichtung der Hubeinrichtungen (15) einen Winkel 90° ± 30°, insbesondere 90° ±15°, einschließt und
- wobei die Kraft ausgeübt von den Zentrierzangen (8) auf die Stange (13) und die Hubkraft der Hubeinrichtungen (15) derart aufeinander abgestimmt sind, dass die Zangenkraft ausreicht, die Stange (13) in Bewegungsrichtung der Zentrierzangen (8) auf den Hubeinrichtungen (15) zu verschieben und ein Heben der Stange (13) mittels der Hubeinrichtungen (15) in die Zentrierlage auch bei einem ersten Kontakt der Stange (13) mit einer der Stützflächen (11) möglich ist.

2. Zentriereinrichtung nach Anspruch 1, **dadurch gekennzeichnet, dass** die Hubeinrichtungen (15) mit einer Stange (13) in Kontakt gelangende Auflageflächen (19) mit seitlichen Endbereichen (20) aufweisen, die zur Verhinderung eines seitlichen Abgleitens einer Stange (13) aufwärts gerichtet sind, wobei zwischen diesen Endbereichen (20) ein Bereich der Auflageflächen (19) zum Übertragen der Hubkraft auf die Stange (13) vorgesehen ist und wobei die Distanz der aufgerichteten Endbereiche (20) ein seitliches Spiel (22) gegenüber einer auf den Auflageflächen (19) aufliegenden Stange (13) zulassend gestaltet sind.

3. Zentriereinrichtung nach Anspruch 1 oder 2, **dadurch gekennzeichnet, dass** die die Hubkraft übertragenden Auflageflächen (19) der Hubeinrichtungen (15) an freien Enden von Schwenkhebeln vorgesehen sind, deren Schwenklager ortsfest in einem Niveau unterhalb der Zentriereinheiten (2, 3) angeordnet sind.

4. Zentriereinrichtung nach einem der Ansprüche 1 bis 3, **dadurch gekennzeichnet, dass** die Zentrierzangen (8) einer Zentriereinheit (2, 3) längs einer an der Zentriereinheit (2, 3) vorgesehenen Führung (9) zueinander und voneinander verschiebbar angeordnet sind.

5. Zentriereinrichtung nach einem der Ansprüche 1 bis 4, **dadurch gekennzeichnet, dass** zumindest eine der Zentriereinheiten (2, 3) zwecks Anpassung an unterschiedliche Längen der Stangen (13) gegenüber der zweiten Zentriereinheit (2, 3) unter Veränderung des Abstands (1) zu dieser bewegbar und von dieser wegbewegbar ist, vorzugsweise durch Verschieben entlang einer ortsfesten Führung (4).

6. Zentriereinheit nach einem der Ansprüche 1 bis 5, **dadurch gekennzeichnet, dass** die Zentrierzangen (8) einer Zentriereinheit (2, 3) über ein hydraulisch betriebenes Zahnstangengetriebe (10) miteinander bewegungsgekoppelt sind.

## Claims

1. A centering device for centering the two ends of a rod (13) having a round cross-section, preferably a hot, in particular a white-hot rod (13) made of steel, **characterized by** a combination of the following features:
- at least two lifting devices (15) movable independently of each other, which support and lift the rod (13) and, in each case, are oriented on at least one end zone (16) each for supporting the rod (13),
- in each case, one centering unit (2, 3) provided adjacent to the lifting devices (15), which lift the end zones (16) of the rod (13), and contacting the rod (13) in a raised state,
- wherein each centering unit (2, 3) comprises two centering pliers (8) which are symmetrically movable relative to each other toward a centre plane (7) and with each of them having two supporting surfaces (11) inclinded against each other and getting into contact with the rod (13), which supporting surfaces are provided centro-symmetrically toward a centre (12) in which the centre of the end zones of the rod (13) is supposed to end up lying, wherein the moving direction (24) of the two centering pliers (8) encloses an angle of 90° ± 30°, in particular of 90° ± 15°, with the direction of the reciprocating motion of the lifting devices (15), and
- wherein the force applied by the centering pliers (8) to the rod (13) and the lifting force of the lifting devices (15) are matched with each other such that the force of the pliers is sufficient for displacing the rod (13) on the lifting devices (15) in the moving direction of the centering pliers (8) and a lifting of the rod (13) into the centering position via the lifting devices (15) is possible also during a first contact of the rod (13) with one of the supporting surfaces (11).

2. A centering device according to claim 1, **characterized in that** the lifting devices (15) comprise bearing surfaces (19) getting into contact with a rod (13) and having lateral end zones (20) which are oriented upwards for preventing a rod (13) from slipping laterally, wherein, between said end zones (20), an area of the bearing surfaces (19) is provided for transferring the lifting force onto the rod (13) and wherein the distance of the upright end zones (20) is configured so as to allow a lateral clearance (22) with respect to a rod (13) resting on the bearing surfaces (19).

3. A centering device according to claim 1 or 2, **characterized in that** the bearing surfaces (19) of the lifting devices (15), which bearing surfaces transmit the lifting force, are provided at free ends of pivoted levers the pivot bearings of which are arranged stationarily at a level below that of the centering units (2, 3).

4. A centering device according to any of claims 1 to 3, **characterized in that** the centering pliers (8) of a centering unit (2, 3) are arranged alongside a guide (9) provided on the centering unit (2, 3) such that they are displaceable toward and from each other.

5. A centering device according to any of claims 1 to 4, **characterized in that** at least one of the centering units (2, 3) is movable toward and away from the second centering unit (2, 3) for the purpose of adjusting itself to different lengths of the rods (13), whereby the distance (1) is changed, preferably by sliding along a stationary guide (4).

6. A centering device according to any of claims 1 to 5, **characterized in that** the centering pliers (8) of a centering unit (2, 3) are motionally coupled to each other via a hydraulically operated rack-and-pinion gear (10).

## Revendications

1. Dispositif de centrage pour centrer les deux extrémités d'une barre (13) avec une section ronde, de préférence une barre chaude et en particulier une barre chauffée au rouge (13) en acier, **caractérisé par** la combinaison des caractéristiques suivantes :
- au moins deux dispositifs de levage (15), mobiles indépendamment l'un de l'autre, qui soutiennent et qui lèvent la barre (13), orientés respectivement pour soutenir la barre (13) à au moins une zone terminale respective (16),
- une unité de centrage respective (2, 3), qui est prévue au voisinage des dispositifs de levage (15) levant les zones terminales (16) de la barre (13) et qui vient en contact avec la barre (13) dans la situation levée,
- dans lequel chaque unité de centrage comprend deux pinces de centrage (8) mobiles l'une par rapport à l'autre symétriquement par rapport à un plan médian (7), parmi lesquelles chacune comprend deux surfaces de soutien (11) inclinées l'une par rapport à l'autre et venant en contact avec la barre (13), qui sont prévues à symétrie centrale par rapport à un centre (12) auquel doit venir se placer le centre des zones terminales de la barre (13), la direction de déplacement (24) des deux pinces de centrage (8) définissant avec la direction du mouvement de levage des dispositifs de levage (15) un angle de 90° ± 30°, en particulier 90° ± 15°, et
- la force exercée par les pinces de centrage (8) sur la barre (13) et la force de levage des dispositifs de levage (15) sont ajustées l'une à l'autre de telle façon que la force des pinces suffit à déplacer la barre (13) dans la direction de déplacement des pinces de centrage (8) vers les dispositifs de levage (15), et un levage de la barre (13) au moyen des dispositifs de levage (15) est possible dans la position centrée également lors d'un premier contact de la barre (13) avec l'une des surfaces de soutien (11).

2. Dispositif de centrage selon la revendication 1, **caractérisé en ce que** les dispositifs de levage (15) comportent des surfaces d'appui (19) venant en contact avec une barre (13), avec des zones terminales latérales (20) qui sont orientées vers le haut pour empêcher un glissement latéral d'une barre (13), dans lequel il est prévu entre ces zones terminales (20) une zone des surfaces d'appui (19) pour transmettre la force de levage à la barre (13), et dans lequel la distance des zones terminales redressées (20) est conçue pour permettre un jeu latéral (22) par rapport à une barre (13) appuyée sur les surfaces d'appui (19).

3. Dispositif de centrage selon la revendication 1 ou 2, **caractérisé en ce que** les surfaces d'appui (19), transmettant la force de levage, des dispositifs de levage (15) sont prévues aux extrémités libres de leviers pivotants, dont les paliers de pivotement sont agencés stationnaires à un niveau au-dessous des unités de centrage (2, 3).

4. Dispositif de centrage selon l'une des revendications 1 à 3, **caractérisé en ce que** les pinces de centrage (8) d'une unité de centrage (2, 3) sont agencées avec possibilité de déplacement l'une vers l'autre et en éloignement l'une de l'autre le long d'un guidage (9) prévu sur l'unité de centrage (2, 3).

5. Dispositif de centrage selon l'une des revendications 1 à 4, **caractérisé en ce que** l'une au moins des unités de centrage (2, 3), dans le but d'un ajustement à des barres (13) de longueurs différentes, est déplaçable en rapprochement et en éloignement par rapport à la seconde unité de centrage (2, 3) en modifiant la distance (1) par rapport à celle-ci, de préférence par déplacement le long d'un guidage stationnaire (4).

6. Unité de centrage selon l'une des revendications 1 à 5, **caractérisé en ce que** les pinces de centrage (8) d'une unité de centrage (2, 3) sont accouplées l'une à l'autre en termes de mobilité via un mécanisme à crémaillère (10) entraîné par voie hydraulique.
